# EUROPEAN PATENT SPECIFICATION

(11) **EP 3 641 065 B1**
(45) Date of publication and mention of the grant of the patent: **28.07.2021**
(21) Application number: 19204145.7
(22) Date of filing: 18.10.2019
(51) Int. Cl.: H01R 11/28, H01R 43/16, H01M 50/543

(54) **CLAMP FOR A MALE TERMINAL AND MANUFACTURING METHOD THEREOF**
KLEMME FÜR EINEN STECKERANSCHLUSS UND VERFAHREN ZU DEREN HERSTELLUNG
PINCE POUR UNE BORNE MÂLE ET SON PROCÉDÉ DE FABRICATION

(30) Priority: 19.10.2018 IT 201800009615
(43) Date of publication of application: 22.04.2020
(73) Proprietor: MTA S.p.A., 26845 Codogno (Lodi) (IT)
(72) Inventor: ZABAGLIO, Emanuele, 26861 Fombio (LO) (IT); CROTTI, Antonio, 26013 Crema (CR) (IT)
(74) Representative: Perani & Partners S.p.A.

(56) References cited:
- EP-A1- 3 264 534
- DE-A1- 3 634 099
- JP-A- 2018 081 813
- US-A- 5 879 202

## Description

### Technical field

The present invention relates to a clamp for a male terminal, preferably for a battery pole in automotive applications.

### Background art

Battery pole clamps are known in the art. Such clamps comprise a clamping ring and a pair of jaws. The clamping ring has a pair of arms with free ends, adapted to be moved toward each other to a clamping position by the pair of jaws. More in detail, the pair of arms have an inner surface which is configured to contact the male terminal. This inner surface extends between a wider portion and a narrower portion. A series of grooves of constant depth is defined on the inner surface to increase adhesion on the terminal. These grooves extend between a first end portion at the wider portion and a second end portion at the narrower portion. The male terminal is inserted into the clamping ring and clamped by the jaws. Preferably the clamping ring is formed by a cupping process: plastic deformation of a metal plate can be used to realize the structure of the plastic ring . In order to provide a series of grooves on the inner surface of the arms, these grooves must be formed on the plate before the drawing process.

One example of prior art battery pole clamp is disclosed in EP 3 264 534 A1 which discloses a clamp according to the preamble of claim 1.

On the other hand, DE 3634099A1 discloses an electrical connection terminal, not specially designed for battery poles. This terminal has a set of grooves formed on an inner surface of the terminal and having variable depths. More in detail, this document teaches to form grooves in a metal plate, with the maximum depth in a middle area of the plate, and a minimum dept in a peripheral area of the plate. Then, the plate is bent in a direction of compression of the grooves.

### Problem of the prior art

One drawback of the cupping process of the prior art is that it causes the grooves to be stretched and considerably reduced in depth and makes such series of grooves ineffective. Therefore, no significant increase of adhesion may be noted between the clamping ring and the male terminal. A first attempt to obviate this drawback consisted in increasing the depth of the groove all along its extent, which in fact improves the function of the grooves on the inner surface. However, the increased depth was found to result in the formation of cracks in the clamping element. In particular, the risk of cracking is greater at an inner edge of the clamping ring. Such cracks may potentially cause break of the clamping ring during operation, thereby requiring replacement thereof.

### Summary of the invention

In this context, the technical purpose of the present invention is to provide a clamp for a male terminal that can obviate the aforementioned prior art drawbacks.

In particular, the object of the present invention is to provide a clamp having a clamping ring that comprises a series of grooves designed to increase adhesion on the male terminal while preserving the structural integrity of the clamping ring.

This object is solved according to the invention by a clamp for a male terminal according to independent claim 1 and a method of manufacturing said clamp according to independent claim 11. Preferred embodiments are subject of the dependent claims.

The invention provides the formation of grooves having their maximum depth at a first end portion of the groove, where the clamping ring has a greater width, and their minimum depth at a second end portion of the groove, where the clamping ring is narrowed.

By this arrangement, after the cupping process, an adequate depth is maintained at least at the wider portion of the clamping ring, although the grooves are stretched and their depth is reduced. This will result in increased adhesion of the clamping ring on the male terminal. Also, the smaller depth of the grooves at the narrower portion of the clamping ring, reduces cracking in this portion.

The invention particularly addresses both a clamp and a method of fabrication thereof. In the clamp fabrication process, in certain steps, the grooves are formed in a plate, before bending, with a minimum depth toward the middle of the plate and a maximum depth toward the periphery of the plate.

Conversely, DE 3634099A1 teaches to form grooves with the maximum depth in the middle of the plate and a minimum depth in the periphery of the plate. The use of such grooves in the above discussed clamps would not ensure adequate adhesion of the clamping ring on the male terminal. This is because the provision of the maximum depth in a middle area of the plate, which is designed to be bent in a stretch direction during cupping, would substantially nullify the depth at the wider portion of the clamping ring, i.e. where the highest adhesion is required. Conversely, DE 3634099A1 is not affected by the groove stretching problem because the plate is bent in the direction of compression of the grooves. Furthermore, the maximum depth would be provided in an area with a significant cracking risk.

### Brief description of the drawings

Further features and advantages of the present invention will result more clearly from the illustrative, non-limiting description of a preferred, non-exclusive embodiment of a clamp for a male terminal, as shown in the annexed drawings, in which:
- Figure 1 is a perspective view of a clamp for a male terminal,
- Figure 2 is a perspective view of a detail of the clamp for a male terminal,
- Figure 3 is a side view of one example of a male terminal,
- Figure 4 is a sectional view of the clamp for a male terminal,

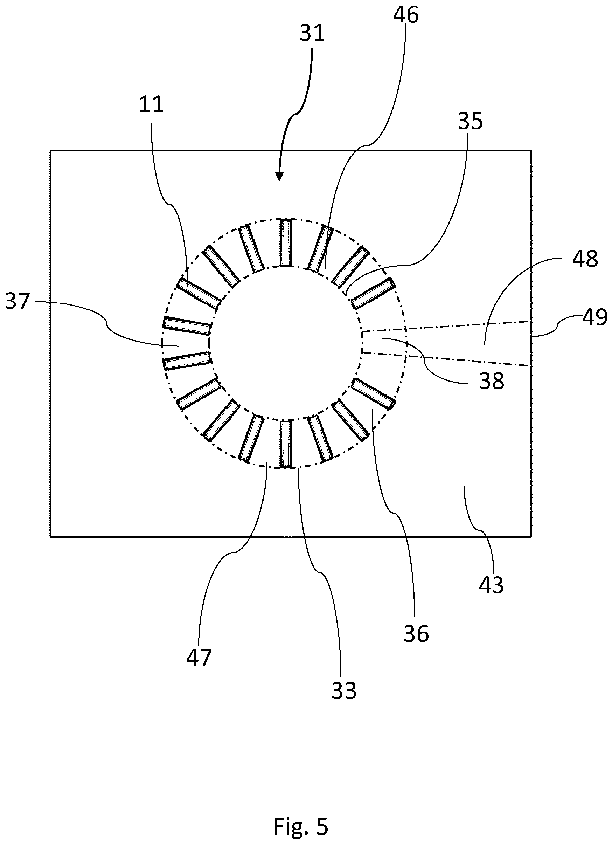

- Figure 5 is a top view of a plate that is used in the cupping process.

### Detailed description

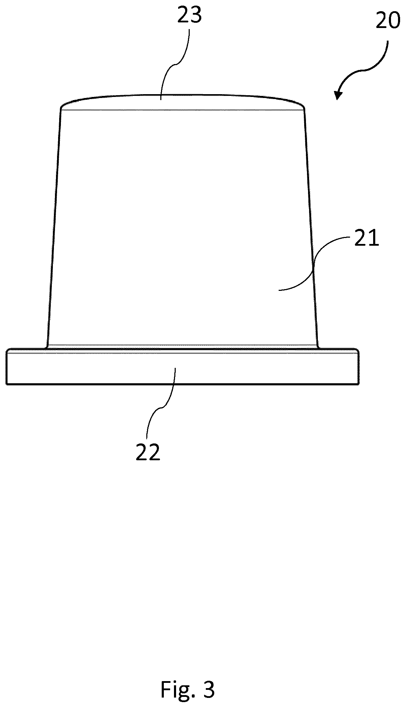

Referring to the accompanying figures, numeral 1 designates a clamp that is designed to be applied to a terminal, preferably a battery pole 20 as shown in Figure 3. This battery pole 20 comprises a main body 21, preferably having a frustoconical shape, which extends between a base 22 and a top 23. The base 22 and the top 23 have a preferably circular shape.

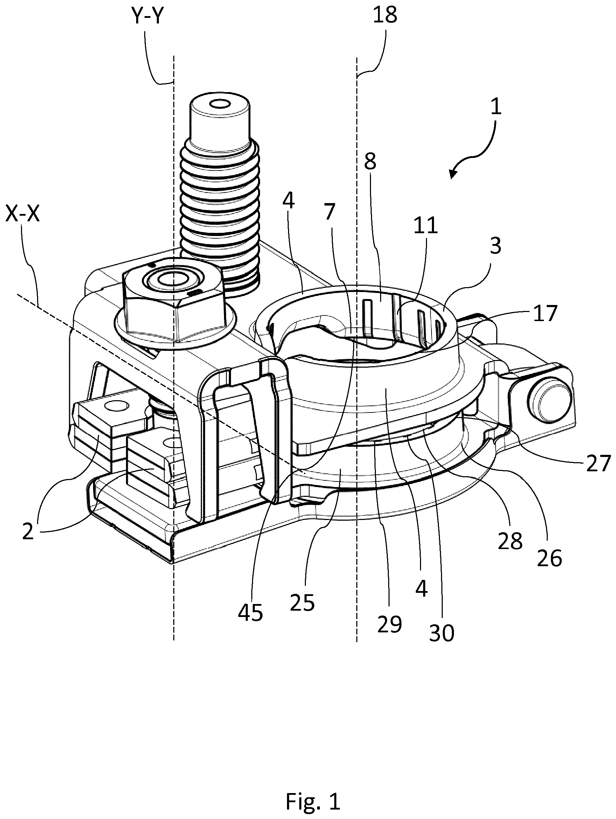

Referring to Figure 1, the clamp 1 comprises a pair of jaws 2 and a clamping ring 3 which are connected to each other. The clamping ring 3 comprises a body 10 having a pair of arms 4 with free ends 5 adapted to be moved toward each other by the pair of jaws 2.

In particular, the arms 4 of the clamping ring 3 are movable toward each other in a first direction X-X. More in detail, the two jaws 2 are spaced apart and are movable toward each other in said first direction X-X. The two jaws 2 extend around the clamping ring 3, and each arm 4 of the clamping ring 3 is associated with a respective jaw 2. By moving the pair of jaws 2 toward each other in the first direction X-X the clamping ring 3 may be switched from an open position to a clamping position, e.g. around a battery pole 20.

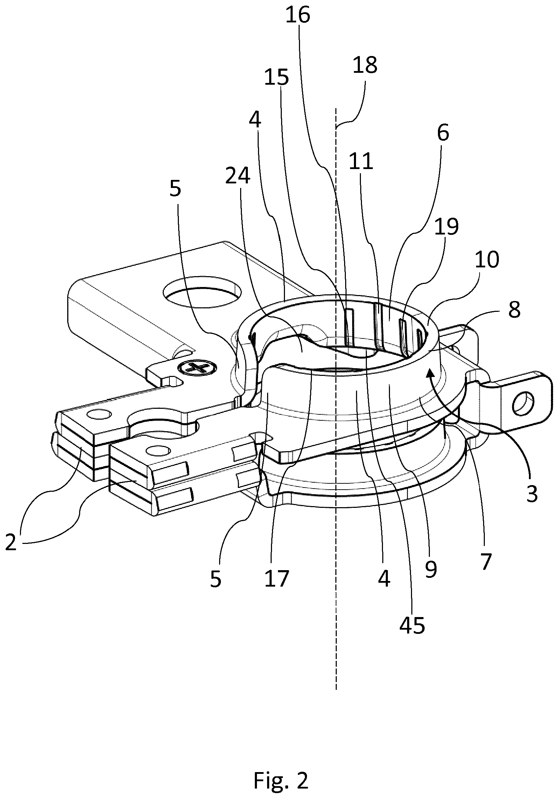

Particularly referring to Figure 2, the pair of arms 4 have an inner surface 6 configured to engage the male terminal and an outer surface 9 opposite to the inner surface 6. Preferably the male terminal is intended as the main body 21 of the battery pole 20. More in detail, the inner surface 6 and the outer surface 9 extend between a wider portion 7 and a narrower portion 8. This wider portion 7 is contiguous to the pair of jaws 2 along a contact line 45. Such contact line 45 represents a folding line of the clamp 1 between the clamping ring 3 and the pair of jaws 2. The narrower portion 8 is opposite to the wider portion 7. In other words, the wider portion 7 and the narrower portion 8 are spaced apart along a second direction Y-Y transverse, preferably perpendicular to the first direction X-X.

The distance of the narrower portion 8 from the axis 18 is smaller than that of the wider portion 7.

Furthermore, the narrower portion 8 defines an edge 17 of the inner surface 6. This edge 17 of the inner surface 6 is spaced apart from the wider portion 7 along the second direction Y-Y. In other words, the edge 17 is spaced apart from the contact line 45 along the second direction Y-Y.

Once the clamping ring 3 has been switched to the clamping position, the pair of arms 4 delimits a central opening 24, for example having a frustoconical shape, which is intended to accommodate the main body 21 of the battery pole 20. In other words, the clamping ring 3 in the clamping position defines a central aperture 24 that is complementary to the main body 21 of the battery pole 20.

The clamping ring 3 extends about an axis 18 extending in the second direction Y-Y. The inner surface 6 faces the axis 18.

In order to increase adhesion of the clamping ring 3 in the clamping position around the main body 21 of the battery pole 20, a set of first grooves 11 is formed in the inner surface 6 of the pair of arms 4. More in detail, the first grooves 11 are formed in the body 10 of the clamping ring 3 from the inner surface 6.

Each first groove 11 extends between a first end portion 41 at the wider portion 7 and a second end portion 42 at the narrower portion 8.

A depth of the first grooves 11 may be defined in the body 10 of the clamping ring 3. These first grooves 11 are blind grooves, i.e. the depth of these first grooves 11 is less than the distance between the inner surface 6 and the outer surface 9 of the clamping ring 3.

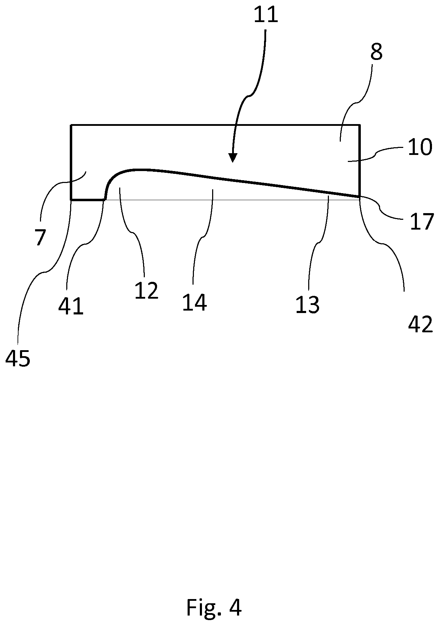

Particularly referring to Figure 4, each first groove 11 has a varying depth along the first groove 11, namely a maximum depth at the first end portion 41 and a minimum depth at the second end portion 42. Therefore, between the wider portion 7 and the narrower portion 8, such depth decreases toward the narrower portion 8. In other words, each first groove 11 has a first zone 12 in the narrower portion 7 characterized by a first depth value, i.e. the maximum depth. Each first groove 11 also has a second zone 13 in the narrower portion 8 characterized by a second depth value, i.e. the minimum depth. The first depth value is greater than the second depth value. In particular, the second depth value is less than 80% of the first depth value, preferably less than 50%.

These first grooves 11 are formed by a punching process. Therefore, the first grooves 11 may be formed on a metal plate 31 by a punch. The clamping ring 3 is formed by said plate 31, when bent in a direction of stretch of the first grooves 11. In other words, the first grooves 11 and the entire inner surface 6 are arranged on a convex side of the plate after bending. Therefore, as the plate 11 is bent, preferably cupped, the first grooves 11 are stretched and the depth defined by the punch is decreased. Thus, once the plate 31 has been bent, both the first zone 12 and the second zone 13 of the first grooves 11 have a depth that is smaller than the depth obtained by the punch on the plate 31.

However, also upon bending of the plate 31, the depth of the first zone 12 of the first grooves 11 remains deeper than the depth of the second zone 13 of the first grooves 11. Accordingly, the resulting depth of the first zone 12 of the first grooves 11, once the plate 31 has been bent, is still able to ensure sufficient adhesion of the clamping ring 3 on the main body 21 of the battery pole 20.

Also, the shallower depth of the second zone 13 of the first grooves 11 ensures improved structural integrity of the clamping ring 3. This is because the cracking risk upon bending of the plate 31 is greater at the narrower portion 8 of the clamping ring 3. This risk increases as the first grooves 11 are formed with a deep depth at the narrower portion 8 of the clamping ring 3.

Each first groove 11 has a curved profile between the first 41 and the second 42 end portions.

It should be noted that, from the very end of a first groove 11, formed in the wider portion 7, the first groove 11 may have a short section with a curved profile having an increasing depth that can reach, from a zero depth value, the first depth value at the first zone 12. The section is preferably limited to 20% of the length of the first groove 11 at the most.

In the preferred embodiment, the first groove 11 is characterized by a curved profile, to avoid cracking at the first zone 12. Nevertheless, in an alternative embodiment, a stepped profile may be also provided which can directly reach the first depth value from a zero depth value.

Instead, at the second region 13, the first groove 11 is characterized by a profile having a substantially constant depth which is equal to the second depth value.

A connecting zone 14 having a curved or straight profile connects the first zone 12 and the second zone 13. This connecting zone 14 is characterized by a depth value that decreases from a value equal to the first depth value at the first zone 12 to a value equal to the second depth value at the second zone 13.

In a further embodiment, in order to further increase adhesion of the clamping ring 3 around the main body 21 of the battery pole 20, the inner surface 6 of the clamping ring 3 has a set of second grooves 19. Each second groove 19 extends between the respective first 15 and second 16 end portions and is arranged between two first grooves 11. For example, if each second groove 19 is immediately adjacent to two first grooves 11, an alternation of a first groove 11 and a second groove 19 is defined on the inner surface 6. In other embodiments, each second groove 19 may be arranged between two first grooves 11 without being directly adjacent thereto. Here, for example, an embodiment may be provided in which a pair of second grooves 19 is interposed between two first grooves 11.

Similar to the first grooves 11, each second groove 19 has its maximum depth proximate to the first end portion 15 and its minimum depth at of the second end portion 16. Still similar to the first grooves 11, each second groove 19 mainly extends in the second direction Y-Y.

Preferably, the distance of the second end portions 42 of the first grooves 11 from the edge 17 is greater than the distance of the second end portions 16 of the second grooves 19 from the edge 17.

Thus, in the preferred embodiment, the second end portions 42 of the first grooves 11 extend to the edge 17, whereas the second end portions 16 of the second grooves 19 are spaced apart from the edge 17. It shall be noted that, also in the embodiment in which the clamping ring 3 only comprises the set of first grooves 11, the second end portions 42 of the first grooves 11 may extend to the edge 17 or be spaced apart from the edge 17.

It shall be also noted that, preferably, the extent of the second grooves 19 in the second direction Y-Y 19 is smaller than the extent of the first grooves 11 in the second direction Y-Y.

However, as regards the first end portions 41, 15 of the first 11 and the second 19 grooves, these are preferably spaced apart from the contact line 45, for example in the second direction Y-Y. This also occurs in the embodiment in which the clamping ring 3 only comprises the set of first grooves 11.

In a particular embodiment, the clamp 1 comprises an additional clamping ring 25 which extends about the axis 18. This additional clamping ring 25 is connected to the pair of jaws 2 and has the same characteristics as the clamping ring 3 that has been described above in detail. In particular, this additional clamping ring 25 is located below the clamping ring 3. Furthermore, the additional clamping ring 25 is spaced apart from the clamping ring 3 in the second direction Y-Y.

More in detail, the edge 28 of the additional clamping ring 25 faces the above described clamping ring 3. The additional clamping ring 25 also has a set of first grooves 29. In a preferred embodiment, the additional clamping ring 25 has a set of second grooves 30. The first 29 and the second 30 grooves of the additional clamping ring 30 have the same characteristics as the first 11 and the second 19 grooves of the clamping ring 3 respectively. Each first groove 29 of such additional clamping ring 25 extends between a first end portion (not shown in the accompanying figures) at the wider portion 26 of the additional clamping ring 25 and a second end portion (not shown in the accompanying figures) at the narrower portion 27 of the additional clamping ring 25. On the other hand, each second groove 30 of such additional clamping ring 25 extends between the respective first and second end portions (not shown in the accompanying figures) and is arranged between two first grooves 29 of the additional clamping ring 25. This will ensure enhanced adhesion of the additional clamping ring 25 on the main body 21 of the battery pole 20. The structural integrity of the additional clamping ring 25 is also ensured.

A method of manufacturing a clamp 1 for the male terminal is now described.

This method comprises the step of providing a metal plate 31 having a first surface 43. The plate 31 also has a second surface (not shown) opposite to the first surface 43.

Then the method comprises the step of defining an annulus 36 on the first surface 43 of the plate 31, which extends between an outer circular contour 33 having radius R1 and an inner circular contour 35 having radius R2, which is less than the radius R1. The annulus 36 has an inner annular portion 46 contiguous to the inner circular contour 35 and an outer annular portion 47 contiguous to the outer circular contour 33. The inner annular portion 46 and the outer annular portion 47 are spaced apart in a radial direction of the annulus 36.

The method also comprises the step of defining in the annulus 36 a punching zone 37 and a first removal zone 38 complementary to the punching zone 37. The punching zone 37 extends substantially all along the annulus 36. Preferably, the punching zone 37 extends over more than 70% of the annulus 36.

Then, the method comprises the step of defining in the plate 31 a second removal zone 48, external to the annulus 36, which extends from the first removal zone 38 to an outer edge 49 of the plate 31. As more clearly explained hereinafter, this second removal zone 48 helps defining the pair of jaws 2.

Then, the method comprises the step of forming a set of first grooves 11 by punching in the punching zone 37 so that each first groove 11 will extend between a first end portion 41 at the outer annular portion 47, and a second end portion 42 at the inner annular portion 46, and so that each first groove has its maximum depth at the first end portion 41 and its minimum depth at the second end portion 42.

Once the set of first grooves 11 has been formed, the method comprises the step of removing a portion of the plate 31 inside the inner circular contour 35, the first removal zone 38 and the second removal zone 48, by using a cutting tool.

Then, the method comprises the step of cupping the plate 31 at the annulus 36. This step of cupping the plate 31 at the annulus 36 involves bending the plate 31 in a direction of stretch of the first grooves 11. As the plate 31 is bent, the depth of the first grooves 11 is reduced. Nevertheless, even after bending, as described above, the depth of the grooves 11 at the first end portion 41 is maintained, for adequate adhesion of the clamping ring 3 on a male terminal. At the same time, the depth of the grooves 11 at of the second end portion 42 prevents cracking in the clamping ring 3 while the plate 31 is being bent.

As a result of the above discussed method, the inner annular portion 46 of the annulus 36 defines the narrower portion 8 of the clamping ring 3, whereas the outer annular portion 47 of the annulus 36 defines the wider portion 7. At the same time, the inner circular contour 35 defines the edge 17 of the clamping ring 3, whereas the outer circular contour 36 defines the contact line 45. On the other hand, the punching zone 37 defines the inner surface 6 of the clamping ring 3. Thus, considering the first 43 and the second surface of the plate 31, the inner surface 6 is obtained by deforming the first surface 43, whereas the outer surface 9 is obtained by deforming the second surface. In other words, during the cupping step, the first surface 43 is deformed in a manner that it will face the longitudinal axis 18.

It shall be noted that a portion (not shown) of the plate 31 outside the outer circular contour 33 and complementary to the second removal zone 48 will define the jaws 2 of the clamp 1.

It shall be also noted that the free ends 5 of the arms 4 are separated by removing the second zone 38 of the annulus 36.

According to a preferred embodiment of the invention, after the step of forming the set of first grooves 11, the method comprises the step of forming a set of second grooves 19 in the annulus 36 by a punching process, such that:
- each second groove 19 will be arranged between two first grooves 11;
- each second groove 19 will extend between a first end portion 15 spaced apart from the outer circular contour 33 and a second end portion 16 spaced apart from the inner circular contour 35.
- each second groove will have its maximum depth proximate to the first end portion 15 and its minimum depth at of the second end portion 16.

It shall be noted that, preferably, the first end portions 41 of the first grooves 11 are spaced apart from the outer circular contour 33 and the second end portions 42 extend to the inner circular contour 35.

In the embodiment with the additional clamping ring 25, this additional clamping ring 25 is formed with the same method as described herein.

## Claims

1. A clamp (1) for a male terminal, comprising:
- a pair of jaws (2);
- a clamping ring (3) having a pair of arms (4) with free ends (5) adapted to be moved toward each other by the pair of jaws (2), said pair of arms (4) having an inner surface (6) configured to engage a male terminal, said inner surface (6) extending between a wider portion (7), contiguous to the pair of jaws (2) along a contact line (45), and a narrower portion (8), opposite to wider portion (7), the narrower portion (8) defining an edge (17) of the inner surface (6);
- a set of first grooves (11) formed in the inner surface (6) of said pair of arms (4), each first groove (11) extending between a first end portion (41) at the wider portion (7) and a second end portion (42) at the narrower portion (8);
**characterized in that:**
- each first groove (11) has a maximum depth at the first end portion (41) and a minimum depth at the second end portion (42).

2. A clamp (1) as claimed in claim 1, wherein said arms (4) of the clamping ring (3) are adapted to be moved toward each other in a first direction (X-X), said wider portion (7) and said narrower portion (8) being spaced apart from each other in a second direction (Y-Y) transverse to the first direction (X-X).

3. A clamp (1) as claimed in the preceding claim, wherein said clamping ring (3) extends about an axis (18) extending in the second direction (Y-Y).

4. A clamp (1) as claimed in the preceding claim, wherein said clamp (1) comprises an additional clamping ring (25) that extends about the axis (18).

5. A clamp (1) as claimed in any of the preceding claims, wherein the first grooves (11) have a curved or straight profile between said first (41) and second (42) end portions.

6. A clamp (1) as claimed in any of the preceding claims, wherein the clamping ring (3) is formed by a plate (31) which is bent in a direction of stretch of the first grooves (11).

7. A clamp (1) as claimed in any of the preceding claims, wherein said inner surface (6) has a set of second grooves (19), each second groove (19) extending between respective first (15) and second end portions (16) and being arranged between two first grooves (11), each second groove (19) having its maximum depth at the first end portion (15) and its minimum depth at the second end portion (16).

8. A clamp (1) as claimed in the preceding claim, wherein the first end portions (41, 15) of the first and the second grooves (11, 19) are spaced apart from the contact line (45).

9. A clamp (1) as claimed in claim 7 or 8, wherein:
- the second end portions (42) of the first grooves (11) extend to the edge (17), and
- the second end portions (16) of the second grooves (19) are spaced apart from the edge (17).

10. A clamp (1) as claimed in claims 2 and 7, wherein the first (11) and the second (19) grooves mainly extend in the second direction (Y-Y).

11. A method of manufacturing a clamp (1) for a male terminal, comprising the steps of:
- providing a metal plate (31) having a first surface (43);
- defining an annulus (36) on the first surface (43) of the plate (31), the annulus extending between an outer circular contour (33) having radius R1 and an inner circular contour (35) having radius R2 which is less than the radius R1, the annulus (36) having an inner annular portion (46) contiguous to the inner circular contour (35) and an outer annular portion (47) contiguous to the outer circular contour (33);
- defining in the annulus (36) a punching zone (37) and a first removal zone (38), complementary to the punching zone (37);
- defining in the plate (31) a second removal zone (48), external to the annulus (36), which extends from the first removal zone (38) to an outer edge (49) of the plate (31);
- forming a set of first grooves (11) by punching in the punching zone (37) such that each first groove (11) extends between a first end portion (41) at the outer annular portion (47), and a second end portion (42) at the inner annular portion (46), and such that each first groove has its maximum depth at the first end portion (41) and its minimum depth at the second end portion (42);
- removing a portion of the plate (31) inside the inner circular contour (35), the first removal zone (38) and the second removal zone (48), by using a cutting tool;
- cupping the plate (31) at the annulus (36);
- a portion of the plate (31) external to the outer circular contour (33) and complementary to the second removal zone (48) defining jaws (2) of the clamp (1).

12. A method as claimed in claim 11 wherein, after the step of forming the set of first grooves (11), the method comprises the step of forming a set of second grooves (19) in the annulus (36) by a punching process, such that:
- each second groove (19) is arranged between two first grooves (11);
- each second groove (19) extends between a first end portion (15) spaced apart from the outer circular contour (33) and a second end portion (16) spaced apart from the inner circular contour (35);
- each second groove having its maximum depth proximate to the first end portion (15) and its minimum depth at the second end portion (16),
wherein the first end portions (41) of the first grooves (11) are spaced apart from the outer circular contour (33) and the second end portions (42) of the first grooves (11) extend to the inner circular contour (35).

13. A method as claimed in claim 11 or 12, wherein the step of cupping the plate (31) at the annulus (36) involves bending the plate (31) in a direction of stretch of the first grooves (11).

## Patentansprüche

1. Klemme (1) für einen Steckeranschluss, umfassend:
- ein Paar von Backen (2);
- einen Klemmring (3) aufweisend ein Paar von Armen (4) mit freien Enden (5), die ausgelegt sind, durch das Paar von Backen (2) aufeinander zu bewegt zu werden, wobei das Paar von Armen (4) eine Innenfläche (6) aufweist, die konfiguriert ist, um in einen Steckeranschluss einzugreifen, wobei die Innenfläche (6) sich zwischen einem breiteren Abschnitt (7), der an das Paar von Backen (2) entlang einer Kontaktlinie (45) angrenzt, und einem, dem breiteren Abschnitt (7) gegenüber schmaleren Abschnitt (8) erstreckt, indem der schmalere Abschnitt (8) eine Kante (17) der Innenfläche (6) definiert;
- einen Satz von ersten Nuten (11), die in der Innenfläche (6) des Paars von Armen (4) ausgebildet sind, wobei jede erste Nut (11) sich zwischen einem ersten Endabschnitt (41) am breiteren Abschnitt (7) und einem zweiten Endabschnitt (42) am schmaleren Abschnitt (8) erstreckt;
**dadurch gekennzeichnet, dass:**
- jede erste Nut (11) eine maximale Tiefe am ersten Endabschnitt (41) und eine minimale Tiefe am zweiten Endabschnitt (42) aufweist.

2. Klemme (1) wie in Anspruch 1 beansprucht, wobei die Arme (4) des Klemmrings (3) dazu ausgelegt sind, in eine erste Richtung (X-X) aufeinander zu bewegt zu werden, wobei der breitere Abschnitt (7) und der schmalere Abschnitt (8) in einer zweiten Richtung (Y-Y) voneinander beabstandet sind, die quer zur ersten Richtung (X-X) verläuft.

3. Klemme (1) wie im vorhergehenden Anspruch beansprucht, wobei der Klemmring (3) sich um eine Achse (18) erstreckt, die sich in der zweiten Richtung (Y-Y) erstreckt,

4. Klemme (1) wie im vorhergehenden Anspruch beansprucht, wobei die Klemme (1) einen zusätzlichen Klemmring (25) umfasst, der sich um die Achse (18) erstreckt.

5. Klemme (1) wie in irgendeinem der vorhergehenden Ansprüche beansprucht, wobei die ersten Nuten (11) ein gekrümmtes oder gerades Profil zwischen dem ersten (41) und dem zweiten (42) Endabschnitt aufweisen.

6. Klemme (1) wie in irgendeinem der vorhergehenden Ansprüche beansprucht, wobei der Klemmring (3) durch eine Platte (31) ausgebildet ist, die in einer Dehnungsrichtung der ersten Nuten (11) gebogen ist.

7. Klemme (1) wie in irgendeinem der vorhergehenden Ansprüche beansprucht, wobei die Innenfläche (6) einen Satz von zweiten Nuten (19) aufweist; jede zweite Nut (19) sich zwischen den jeweiligen ersten (15) und zweiten Endabschnitten (16) erstreckt und zwischen zwei ersten Nuten (11) angeordnet ist; jede zweite Nut (19) ihre maximale Tiefe am ersten Endabschnitt (15) und ihre minimale Tiefe am zweiten Endabschnitt (16) aufweist.

8. Klemme (1) wie im vorhergehenden Anspruch beansprucht, wobei die ersten Endabschnitte (41, 15) der ersten und der zweiten Nuten (11, 19) von der Kontaktlinie (45) beabstandet sind.

9. Klemme (1) wie in Anspruch 7 oder 8 beansprucht, wobei:
- die zweiten Endabschnitte (42) der ersten Nuten (11) sich bis zur Kante (17) erstrecken, und
- die zweiten Endabschnitte (16) der zweiten Nuten (19) von der Kante (17) beabstandet sind.

10. Klemme (1) wie in den Ansprüchen 2 und 7 beansprucht, wobei die ersten (11) und die zweiten (19) Nuten sich hauptsächlich in der zweiten Richtung (Y-Y) erstrecken.

11. Verfahren zur Herstellung einer Klemme (1) für einen Steckeranschluss, umfassend folgende Schritte:
- Bereitstellen einer Metallplatte (31) aufweisend eine erste Oberfläche (43);
- Definieren eines Ringraumes (36) auf der ersten Oberfläche (43) der Platte (31), wobei der Ringraum sich zwischen einer äußeren Kreiskontur (33) mit dem Radius R1 und einer inneren Kreiskontur (35) mit dem Radius R2, der kleiner als der Radius R1 ist, erstreckt, wobei der Ringraum (36) einen, an die innere Kreiskontur (35) angrenzenden inneren Ringabschnitt (46) und einen, an die äußere Kreiskontur (33) angrenzenden äußeren Ringabschnitt (47) aufweist;
- Definieren im Ringraum (36) eines Stanzbereiches (37) und eines ersten Entfernungsbereiches (38), der zum Stanzbereich (37) komplementär ist;
- Definieren in der Platte (31) eines zweiten Entfernungsbereiches (48) außerhalb des Ringraumes (36), der sich von dem ersten Entfernungsbereich (38) bis zu einer Außenkante (49) der Platte (31) erstreckt;
- Ausbilden eines Satzes von ersten Nuten (11) durch Stanzen im Stanzbereich (37), so dass jede erste Nut (11) sich zwischen einem ersten Endabschnitt (41) am äußeren Ringabschnitt (47) und einem zweiten Endabschnitt (42) am inneren Ringabschnitt (46) erstreckt und so, dass jede erste Nut ihre maximale Tiefe am ersten Endabschnitt (41) und ihre minimale Tiefe am zweiten Endabschnitt (42) erreicht;
- Entfernen eines Abschnitts der Platte (31) innerhalb der inneren Kreiskontur (35), des ersten Entfernungsbereiches (38) und des zweiten Entfernungsbereiches (48) unter Verwendung eines Schneidwerkzeugs;
- Napfziehen der Platte (31) am Ringraum (36);
- Definieren der Backen (2) der Klemme (1) durch einen Abschnitt der Platte (31) außerhalb der äußeren Kreiskontur (33) und komplementär zum zweiten Entfernungsbereich (48).

12. Verfahren wie in Anspruch 11 beansprucht, wobei nach dem Schritt des Ausbildens des Satzes von ersten Nuten (11), das Verfahren den Schritt des Ausbildens eines Satzes von zweiten Nuten (19) in dem Ringraum (36) durch einen Stanzprozess umfasst, so dass:
- jede zweite Nut (19) zwischen zwei ersten Nuten (11) angeordnet ist;
- jede zweite Nut (19) sich zwischen einem ersten Endabschnitt (15), der von der äußeren Kreiskontur (33) beabstandet ist, und einem zweiten Endabschnitt (16), der von der inneren Kreiskontur (35) beabstandet ist, erstreckt;
- jede zweite Nut ihre maximale Tiefe in der Nähe des ersten Endabschnitts (15) und ihre minimale Tiefe am zweiten Endabschnitt (16) erreicht,
wobei die ersten Endabschnitte (41) der ersten Nuten (11) von der äußeren Kreiskontur (33) beabstandet sind und die zweiten Endabschnitte (42) der ersten Nuten (11) sich bis zur inneren Kreiskontur (35) erstrecken.

13. Verfahren wie in Anspruch 11 oder 12 beansprucht, wobei der Schritt des Napfziehens der Platte (31) am Ringraum (36) das Biegen der Platte (31) in einer Dehnungsrichtung der ersten Nuten (11) beinhaltet.

## Revendications

1. Cosse (1) pour une borne mâle, comprenant :
- une paire de mâchoires (2) ;
- une bague de serrage (3) ayant une paire de bras (4) avec des extrémités libres (5) aptes à être déplacées l'une vers l'autre par la paire de mâchoires (2), ladite paire de bras (4) ayant une surface interne (6) configurée pour mettre en prise une borne mâle, ladite surface interne (6) s'étendant entre une portion plus large (7), contiguë à la paire de mâchoires (2) le long d'une ligne de contact (45), et une portion plus étroite (8), opposée à la portion plus large (7), la portion plus étroite (8) définissant un bord (17) de la surface interne (6) ;
- un ensemble de premières rainures (11) formées dans la surface interne (6) de ladite paire de bras (4), chaque première rainure (11) s'étendant entre une première portion d'extrémité (41) au niveau de la portion plus large (7) et une deuxième portion d'extrémité (42) au niveau de la portion plus étroite (8) ;
**caractérisée en ce que :**
- chaque première rainure (11) a une profondeur maximale au niveau de la première portion d'extrémité (41) et une profondeur minimale au niveau de la deuxième portion d'extrémité (42).

2. Cosse (1) telle que revendiquée dans la revendication 1, dans laquelle lesdits bras (4) de la bague de serrage (3) sont aptes à être déplacés l'un vers l'autre dans une première direction (X-X), ladite portion plus large (7) et ladite portion plus étroite (8) étant éloignées l'une de l'autre dans une deuxième direction (Y-Y) transversale à la première direction (X-X).

3. Cosse (1) telle que revendiquée dans la revendication précédente, dans laquelle ladite bague de serrage (3) s'étend autour d'un axe (18) s'étendant dans la deuxième direction (Y-Y).

4. Cosse (1) telle que revendiquée dans la revendication précédente, dans laquelle ladite cosse (1) comprend une bague de serrage (25) supplémentaire qui s'étend autour de l'axe (18).

5. Cosse (1) telle que revendiquée dans l'une quelconque des revendications précédentes, dans laquelle les premières rainures (11) ont un profil courbé ou droit entre lesdites premières (41) et deuxièmes (42) portions d'extrémité.

6. Cosse (1) telle que revendiquée dans l'une quelconque des revendications précédentes, dans laquelle la bague de serrage (3) est formée d'une plaque (31) qui est pliée dans une direction d'étirement des premières rainures (11).

7. Cosse (1) telle que revendiquée dans l'une quelconque des revendications précédentes, dans laquelle ladite surface interne (6) a un ensemble de deuxièmes rainures (19), chaque deuxième rainure (19) s'étendant entre des première (15) et deuxième (16) portions respectives et étant disposée entre deux premières rainures (11), chaque deuxième rainure (19) ayant sa profondeur maximale au niveau de la première portion d'extrémité (15) et sa profondeur minimale au niveau de la deuxième portion d'extrémité (16).

8. Cosse (1) telle que revendiquée dans la revendication précédente, dans laquelle les première portions d'extrémité (41, 15) des premières et des deuxièmes rainures (11, 19) sont éloignées de la ligne de contact (45).

9. Cosse (1) telle que revendiquée dans la revendication 7 ou 8, dans laquelle :
- les deuxièmes portions d'extrémité (42) des premières rainures (11) s'étendent jusqu'au bord (17), et
- les deuxièmes portions d'extrémité (16) des deuxièmes rainures (19) sont éloignées du bord (17).

10. Cosse (1) telle que revendiquée dans les revendications 2 et 7, dans laquelle les premières (11) et deuxièmes (19) rainures s'étendent principalement dans la deuxième direction (Y-Y).

11. Procédé de fabrication d'une cosse (1) pour une borne mâle, comprenant les étapes de :
- fournir une plaque métallique (31) ayant une première surface (43) ;
- définir un anneau (36) sur la première surface (43) de la plaque (31), l'anneau s'étendant entre un contour circulaire externe (33) ayant un rayon R1 et un contour circulaire interne (35) ayant un rayon R2 qui est inférieur au rayon R1, l'anneau (36) ayant une portion annulaire interne (46) contiguë au contour circulaire interne (35) et une portion annulaire externe (47) contiguë au contour circulaire externe (33) ;
- définir dans l'anneau (36) une zone de poinçonnage (37) et une première zone de retrait (38), complémentaire à la zone de poinçonnage (37) ;
- définir dans la plaque (31) une deuxième zone de retrait (48), extérieure à l'anneau (36), qui s'étend de la première zone de retrait (38) jusqu'à un bord externe (49) de la plaque (31) ;
- former un ensemble de premières rainures (11) en poinçonnant dans la zone de poinçonnage (37) de sorte que chaque première rainure (11) s'étende entre une première portion d'extrémité (41) au niveau de la portion annulaire externe (47), et une deuxième portion d'extrémité (42) au niveau de la portion annulaire interne (46), et de sorte que chaque première rainure ait sa profondeur maximale au niveau de la première portion d'extrémité (41) et sa profondeur minimale au niveau de la deuxième portion d'extrémité (42) ;
- retirer une portion de la plaque (31) à l'intérieur du contour circulaire interne (35), de la première zone de retrait (38) et de la deuxième zone de retrait (48), en utilisant un outil de découpe ;
- recourber la plaque (31) au niveau de l'anneau (36) ;
- une portion de la plaque (31) extérieure au contour circulaire externe (33) et complémentaire à la deuxième zone de retrait (48) définissant des mâchoires (2) de la cosse (1).

12. Procédé tel que revendiqué dans la revendication 11 dans lequel, après l'étape de former l'ensemble de premières rainures (11), le procédé comprend l'étape de former un ensemble de deuxièmes rainures (19) dans l'anneau (36) au moyen d'un processus de poinçonnage, de sorte que :
- chaque deuxième rainure (19) soit disposée entre deux premières rainures (11) ;
- chaque deuxième rainure (19) s'étende entre une première portion d'extrémité (15) éloignée du contour circulaire externe (33) et une deuxième portion d'extrémité (16) éloignée du contour circulaire interne (35) ;
- chaque deuxième rainure ayant sa profondeur maximale à proximité de la première portion d'extrémité (15) et sa profondeur minimale au niveau de la deuxième portion d'extrémité (16),
dans lequel les premières portions d'extrémité (41) des premières rainures (11) sont éloignées du contour circulaire externe (33) et les deuxièmes portions d'extrémité (42) des premières rainures (11) s'étendent jusqu'au contour circulaire interne (35).

13. Procédé tel que revendiqué dans la revendication 11 ou 12, dans lequel l'étape de recourber la plaque (31) au niveau de l'anneau (36) comporte plier la plaque (31) dans une direction d'étirement des premières rainures (11).
